# EUROPÄISCHE PATENTANMELDUNG

(11) **EP 4 692 488 A1**
(43) Veröffentlichungstag der Anmeldung: **11.02.2026**
(21) Anmeldenummer: 25191636.7
(22) Anmeldetag: 24.07.2025
(51) Int. Cl.: E04F 13/08

(54) **BEFESTIGUNGSVORRICHTUNG UND BAUWERK MIT EINER BEFESTIGUNGSVORRICHTUNG**

(30) Priorität: 05.08.2024 GB 202411498
(71) Anmelder: Leviat AG, 3250 Lyss (CH)
(72) Erfinder: Roik, Matthias, 58455 Witten (DE); Evans, Paul, Swinton, Mexborough, S648TW (GB); Hine, Samuel, Sheffield, S71NW (GB); Piesker, Caroline, 42799 Leichlingen (DE); Stegemann, Michael, 40764 Langenfeld (DE)
(74) Vertreter: Reinhardt, Annette

(57) **Zusammenfassung**

Eine Befestigungsvorrichtung (1) umfasst ein Tragteil (4), ein Halteteil (5) und eine Spanneinrichtung (6). Die Befestigungsvorrichtung (1) weist eine Anlagefläche (24) zur Anlage an einer Tragstruktur (2) auf. Die Spanneinrichtung weist eine Spannachse (25) auf. Das Tragteil (4) weist eine erste Verzahnung (31) auf und das Halteteil (5) eine zweite Verzahnung (32). Die erste Verzahnung (31) ist dazu ausgebildet, in die zweite Verzahnung (32) eingreifen zu können. Die erste Verzahnung (31) weist eine Zahngrundebene (33) auf, die sich durch den Zahngrund der ersten Verzahnung (31) erstreckt. Die Spanneinrichtung (6) weist eine Spannrichtung (x) auf, die parallel zur Spannachse (25) von der Zahngrundebene (33) zu der Anlagefläche (24) gerichtet ist. Das Halteteil (5) weist die Anlagefläche (24) auf. Eine Flächennormale (36) auf eine erste Zahnflanke (29) der zweiten Verzahnung (32) weist einen Richtungsanteil in Spannrichtung (x) auf. Ein Bauwerk umfasst eine Befestigungsvorrichtung (3) und eine Tragstruktur (2).

## Beschreibung

Die Erfindung betrifft eine Befestigungsvorrichtung der im Oberbegriff des Anspruchs 1 angegebenen Gattung sowie ein Bauwerk mit einer Befestigungsvorrichtung.

Aus der GB 2 249 816 B geht eine Befestigungsvorrichtung der gattungsgemäßen Art hervor. Die Befestigungsvorrichtung umfasst eine Konsole mit einer Verzahnung, in die eine Rastplatte eingreift. Die Rastplatte wird über eine in einer Tragwand fixierte Schraube gegen die Konsole gedrückt. Die Konsole liegt an der Tragstruktur an.

Es hat sich gezeigt, dass derartige Befestigungsvorrichtungen sich lockern können, wenn die Spannkraft in der Schraube nachlässt.

Der Erfindung liegt die Aufgabe zugrunde, eine Befestigungsvorrichtung der gattungsgemäßen Art zu schaffen, die eine sichere und feste Fixierung an einer Tragstruktur ermöglicht. Eine weitere Aufgabe der Erfindung liegt darin, ein Bauwerk mit einer Befestigungsvorrichtung anzugeben.

Diese Aufgabe wird bezüglich der Befestigungsvorrichtung durch eine Befestigungsvorrichtung mit den Merkmalen des Anspruchs 1 gelöst. Bezüglich des Bauwerks wird die Aufgabe durch ein Bauwerk mit einer Befestigungsvorrichtung mit den Merkmalen des Anspruchs 12 gelöst.

Die Befestigungsvorrichtung umfasst ein Tragteil und ein Halteteil, die jeweils eine Verzahnung tragen. Eine erste Verzahnung des Tragteils weist eine Zahngrundebene auf. Der Zahngrund der Verzahnung ist jeweils der Bereich, an dem benachbarte Zähne ineinander übergehen. In der Zahngrundebene liegen die Zahngründe der ersten Verzahnung. Das Halteteil weist die Anlagefläche auf. Die Zähne der ersten Verzahnung ragen in an einer Tragstruktur fixiertem Zustand insbesondere von der Zahngrundebene in Richtung auf die Anlagefläche. Die Spanneinrichtung weist eine Spannrichtung auf, die parallel zur Spannachse und von der Zahngrundebene zu der Anlagefläche gerichtet ist. Die Spannrichtung ist daher in an einer Tragstruktur montiertem Zustand der Befestigungsvorrichtung zu der Tragstruktur hin orientiert.

Es ist vorgesehen, dass eine Flächennormale auf eine erste Zahnflanke der zweiten Verzahnung einen Richtungsanteil in Spannrichtung aufweist. Die Flächennormale auf die erste Zahnflanke der zweiten Verzahnung weist demnach mit einem Richtungsanteil zur Anlagefläche hin. Die erste Zahnflanke der zweiten Verzahnung fällt bei horizontal ausgerichteter Spannrichtung insbesondere in Richtung auf die Anlagefläche hin ab. Aufgrund der Neigung der ersten Zahnflanke in entsprechender Richtung übt die Gewichtskraft dann, wenn das Tragteil auf der ersten Zahnflanke aufliegt, eine Kraft auf das Tragteil in Richtung zur Anlagefläche hin aus. Selbst wenn die Spanneinrichtung sich löst, bewirken die ineinandergreifenden Verzahnungen, dass das Tragteil aufgrund seiner Gewichtskraft zur Anlagefläche und damit in eingebautem Zustand zu einer Tragstruktur hin gezogen wird.

Das Halteteil dient insbesondere zur Justage, Lagepositionierung und Arretierung des Tragteils gegenüber der Tragstruktur.

Im Stand der Technik sind die Zahnflanken der Verzahnungen üblicherweise symmetrisch ausgebildet oder parallel zur Spannrichtung ausgerichtet. Ist eine Zahnflanke, auf der die Zähne der ersten Verzahnung aufliegen, von der Anlagefläche abfallend orientiert, so weist eine Flächennormale auf eine solche Zahnflanke einen Richtungsanteil entgegen der Spannrichtung auf. Dadurch bewirkt die Gewichtskraft in eingebautem Zustand der Anordnung eine Kraft, die von der Anlagefläche bzw. der Tragstruktur weg ausgerichtet ist. Eine Zahnflanke, die parallel zur Spannrichtung ausgerichtet ist, übt auf das Tragteil keine Kraft in Spannrichtung aus. Im Unterschied hierzu ist mit der erfindungsgemäßen Anordnung ein Einbau derart möglich, dass die Gewichtskraft des Tragteils aufgrund der Ausrichtung der ersten Zahnflanke der zweiten Verzahnung eine Kraft auf das Tragteil zu der Anlagefläche hin bewirkt.

Auch bei der Montage ist die erfindungsgemäße Gestaltung der zweiten Verzahnung von Vorteil, da das Tragteil mit der ersten Verzahnung in die zweite Verzahnung des Halteteils eingreift und die Gewichtskraft des Tragteils dann daran mitwirkt, dass die Verzahnungen weiter ineinander geschoben werden. Bis zum Festziehen der Spanneinrichtung muss ein Bediener das Tragteil daher weniger stark fixieren. In vorteilhafter Ausgestaltung kann das Tragteil selbsttragend an dem Halteteil angeordnet sein, wenn die Verzahnungen ineinander eingreifen. Die Spanneinrichtung dient dann lediglich zur Sicherung des Halteteils an dem Tragteil. Dadurch ist die Montage der Befestigungsvorrichtung vereinfacht.

Insbesondere sind die beiden Zahnflanken mindestens eines Zahns, insbesondere die beiden Zahnflanken aller Zähne der ersten Verzahnung, zur Spannachse um unterschiedliche Winkel geneigt.

Die erste Verzahnung und die zweite Verzahnung dienen insbesondere zur Einstellung der Relativposition des Halteteils gegenüber dem Tragteil. Hierzu ist die erste Verzahnung insbesondere dazu ausgebildet, in mindestens zwei unterschiedlichen Positionen, insbesondere in einer Vielzahl von unterschiedlichen Positionen, in die zweite Verzahnung eingreifen zu können. Dies wird insbesondere dadurch erreicht, dass beide Verzahnungen gleichmäßig mit konstantem Rastabstand ausgebildet sind und keine anderen Elemente vorgesehen sind, die ein Eingreifen der Verzahnungen in unterschiedlichen Positionen verhindern.

Um eine feine Positionierung zu ermöglichen, ist insbesondere vorgesehen, dass der Rastabstand der zweiten Verzahnung höchstens 10 mm, insbesondere höchstens 5 mm, insbesondere höchstens 3 mm beträgt. Insbesondere ist der Rastabstand der zweiten Verzahnung genau so groß wie der Rastabstand der ersten Verzahnung. Der Rastabstand entspricht dem Rastermaß der Verzahnungen. Der Rastabstand ist der Abstand benachbarter Zahnspitzen der Verzahnung. Insbesondere beträgt der Rastabstand der zweiten Verzahnung mindestens 2 mm.

Eine einfache Gestaltung ergibt sich, wenn das Halteteil eine Öffnung für die Spanneinrichtung aufweist, durch die die Spanneinrichtung ragt. Dadurch kann das Halteteil auf einfache Weise gegenüber der Spanneinrichtung und gegenüber dem Tragteil positioniert werden.

Insbesondere weist das Halteteil zwei Längsseiten auf, die quer zur Längsrichtung der Zähne der zweiten Verzahnung liegen. Die beiden Längsseiten sind von einer Oberseite und von einer Unterseite des Halteteils verbunden.

Insbesondere weist die Oberseite des Halteteils zur Öffnung einen ersten Abstand auf, und die Unterseite des Halteteils weist zur Öffnung einen zweiten Abstand auf. Der Abstand ist dabei jeweils senkrecht zur Längsrichtung der Zähne der zweiten Verzahnung gemessen. Insbesondere ist der erste Abstand kleiner als der zweite Abstand. Dadurch kann auf einfache Weise eine selbsttätige Ausrichtung des Halteteils um die Öffnung bzw. die durch die Öffnung ragende Spanneinrichtung umgesetzt werden, wenn die Gewichtsverteilung des Halteteils entsprechend gewählt wird. Das Halteteil ist insbesondere als Platte ausgebildet.

Insbesondere weist das Halteteil eine Aufdickung auf, die sich aus der zweiten Verzahnung erhebt und zumindest einen Teil der Zähne der zweiten Verzahnung in zwei Zahnabschnitte teilt. Insbesondere ist die Aufdickung so gestaltet, dass sie sich weiter zur Unterseite als zur Oberseite erstreckt. Durch die Aufdickung kann alternativ oder zusätzlich zur außermittigen Anordnung der Öffnung zwischen Oberseite und Unterseite eine selbsttätige Ausrichtung der Drehlage des Halteteils um die Öffnung bzw. um eine durch die Öffnung ragende Spanneinrichtung erreicht werden. Die Aufdickung erlaubt auf einfache Weise eine optische Kontrolle der korrekten Orientierung des Halteteils.

Auch andere Mittel für eine selbsttätige Ausrichtung der Drehlage um die Öffnung, insbesondere eine unsymmetrische Gewichtsverteilung um die Öffnung, können vorteilhaft sein.

Insbesondere weist die Aufdickung eine glatte Oberfläche auf.

Insbesondere weist zumindest ein Teil der Zähne der ersten Verzahnung zwei Zahnabschnitte auf. Der Abstand der Zahnabschnitte ist insbesondere so auf die Gestalt der Verdickung abgestimmt, dass das Halteteil sich gegenüber dem Tragteil nicht um die Spannachse verdrehen kann, auch wenn die Verzahnungen nicht in Eingriff miteinander stehen. Insbesondere ist der Abstand mindestens eines Zahnabschnitts zur Spannachse kleiner als der größte Abstand der Verdickung zur Spannachse, wobei die Abstände senkrecht zur Spannachse gemessen sind. Bei quadratischer Form des Halteteils ist der Abstand insbesondere kleiner als das 1,4fache der Breite des Halteteils.

Der Abstand der Zahnabschnitte ist insbesondere um höchstens 4 mm größer als eine in gleicher Richtung gemessene Breite der Aufdickung. Insbesondere ist die Aufdickung so angeordnet und ausgebildet, dass sie zwischen die Zahnabschnitte ragen kann, wenn die Befestigungsvorrichtung an einer Tragstruktur fixiert ist. Die Aufdickung positioniert die Zahnabschnitte der ersten Verzahnung und damit das Tragteil insbesondere gegenüber dem Halteteil.

Eine glatte Oberfläche der Aufdickung erleichtert die Positionierung des Tragteils an dem Halteteil, da sich die Zähne der ersten Verzahnung an der Aufdickung nicht verhaken können.

Die Befestigungsvorrichtung ist insbesondere dazu vorgesehen, auf der Befestigungsvorrichtung aufgelegte zu tragende Strukturen zu halten. Hierzu ist insbesondere vorgesehen, dass das Tragteil an der der Auflagefläche entfernt liegenden Seite eine Auflage mit einer Tragfläche aufweist. Das Tragteil kann insbesondere ein Konsolanker sein, der zur Befestigung von Mauerwerk an einer Fassade dient. Das Mauerwerk bildet insbesondere eine wetterfeste Hülle, die vor der Tragstruktur als Fassade angeordnet ist und durch mindestens eine Konsolanordnung, insbesondere durch eine Vielzahl von Konsolanordnungen gehalten ist. Die Auflage kann beispielsweise eine längliche Platte oder ein längliches Winkelprofil sein. Insbesondere ist eine Auflage an mehreren Grundkörpern von Tragteilen festgelegt. Eine durchgehende Auflage kann demnach mehreren Befestigungseinrichtungen zugeordnet sein.

Für die mit der Befestigungsvorrichtung zu befestigenden Strukturen können anstatt einer Auflage auch andere Elemente wie beispielsweise Halter für Fassadenplatten oder dergleichen vorgesehen sein.

Die Spanneinrichtung umfasst insbesondere ein Gewinde. Die Spannachse ist insbesondere die Mittelachse des Gewindes. Die Spanneinrichtung kann beispielsweise eine Schraube, ein Dübel, beispielsweise ein Spreizdübel, eine Ankerkopfschraube oder ein alternative Befestigungsart sein. Die Spanneinrichtung umfasst insbesondere einen Bolzen mit einem Außengewinde und eine Mutter mit einem Innengewinde, die zum Verspannen der Spanneinrichtung auf dem Bolzen aufzuschrauben ist.

Die Spanneinrichtung kann ergänzend eine Feder aufweisen, die ein Teil der Spanneinrichtung vorspannt, um die Fixierung zu vereinfachen. Dies kann insbesondere vorgesehen sein, wenn die Spanneinrichtung eine Hammerkopfschraube umfasst, deren Schraubenkopf in einer Halteschiene der Tragstruktur angeordnet ist. Die Feder ist insbesondere in der Befestigungsschiene angeordnet und spannt die Hammerkopfschraube in Richtung auf das Halteteil vor. Insbesondere ist eine Federplatte unterhalb der Hammerkopfschraube in Kontakt zu Schienenlippen der Befestigungsschiene vorgesehen, um die Rastplatte vorzuspannen.

Eine Flächennormale auf eine zweite Zahnflanke der zweiten Verzahnung weist insbesondere einen Richtungsanteil entgegen der Spannrichtung auf. Beide Zahnflanken von Zähnen der zweiten Verzahnung sind insbesondere in der gleichen Richtung geneigt.

Eine Befestigungseinrichtung gemäß der Erfindung kann insbesondere sowohl Querkräfte als auch Biegemomente aufnehmen. Die erfindungsgemäße Befestigungseinrichtung ist insbesondere zur Arretierung und Justage von Bauteilen gegenüber Gebäuden, Wänden oder anderen Tragstrukturen vorgesehen.

Für ein Bauwerk mit einer Befestigungsvorrichtung und einer Tragstruktur ist vorgesehen, dass die Spanneinrichtung an der Tragstruktur fixiert ist und das Tragteil und das Halteteil in Richtung der Spannachse mit der Anlagefläche gegen die Tragstruktur spannt. Die erste Verzahnung und die zweite Verzahnung greifen dabei ineinander ein. Die Zahnflanken der zweiten Verzahnung fallen in Richtung auf die Anlagefläche der Tragstruktur ab. Dadurch wirkt die Gewichtskraft teilweise in Richtung auf die Tragstruktur und das Tragteil wird zur Tragstruktur gezogen, selbst wenn die Spanneinrichtung sich unbeabsichtigt lockern sollte.

Die Tragfläche ist insbesondere horizontal ausgerichtet und weist nach oben.

Die Längsrichtung der Zähne der zweiten Verzahnung schließt mit der Wirkrichtung der Schwerkraft insbesondere einen Winkel von mindestens 45° ein. Insbesondere beträgt der Winkel mindestens 60°. In vorteilhafter Gestaltung beträgt der Winkel etwa 90°.

Die Längsrichtung der Zähne der zweiten Verzahnung verläuft insbesondere etwa horizontal. Dadurch können die aufeinanderliegenden Verzahnungen nicht in Längsrichtung der Zähne aufeinander abrutschen.

Insbesondere verlaufen die Längsrichtung der Zähne der ersten Verzahnung und die Längsrichtung der Zähne der zweiten Verzahnung parallel zueinander.

Ausführungsbeispiele der Erfindung werden im Folgenden anhand der Zeichnung beschrieben. Es zeigen:
- Fig. 1: eine schematische Schnittdarstellung eines Gebäudes im Bereich einer Befestigungsvorrichtung,
- Fig. 2: eine Draufsicht auf die Anordnung aus Fig. 1 in Richtung des Pfeils II in Fig. 1, wobei die Tagstruktur und die getragene Struktur geschnitten dargestellt sind,
- Fig. 3: eine Seitenansicht der Befestigungsvorrichtung,
- Fig. 4: eine perspektivische Darstellung der Befestigungsanordnung in Explosionsdarstellung,
- Fig. 5: eine Seitenansicht der Befestigungsvorrichtung in Explosionsdarstellung,
- Fig. 6: eine Draufsicht auf die Anordnung aus Fig. 5 in Explosionsdarstellung,
- Fig. 7: eine ausschnittsweise vergrößerte Darstellung des Bereichs der Verzahnungen aus Fig. 5,
- Fig. 8: eine perspektivische Darstellung des Halteteils.

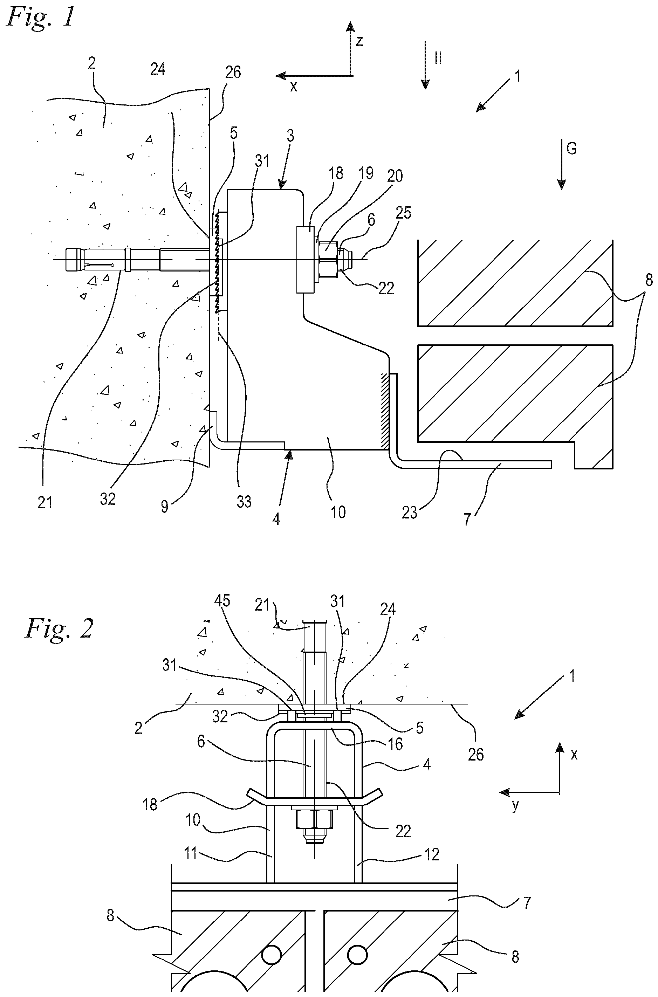

Fig. 1 zeigt in teilgeschnittener Darstellung einen Ausschnitt eines Bauwerks 1. Das Bauwerk 1 umfasst eine Tragstruktur 2. Die Tragstruktur 2 kann beispielsweise eine Struktur wie Wand, eine Decke oder ein Balken des Bauwerks 1 sein. An der Tragstruktur 2 ist eine Befestigungsvorrichtung 3 fixiert. Die Befestigungsvorrichtung 3 trägt eine getragene Struktur 8. Die getragene Struktur 8 kann beispielsweise aus den Mauersteinen einer Vormauerschale bestehen. Die Befestigungsvorrichtung 3 ist in diesem Fall insbesondere ein Konsolanker. Die getragene Struktur 8 kann alternativ Fassadenplatten oder andere an einer Tragstruktur 2 zu befestigende Elemente umfassen.

Die Befestigungsvorrichtung 3 umfasst ein Tragteil 4, ein Halteteil 5 sowie eine Spanneinrichtung 6. Das Tragteil 4 weist eine Einrichtung zur Halterung der getragenen Struktur 8 auf. Im Ausführungsbeispiel ist eine Auflage 7 vorgesehen. Die Auflage 7 weist eine Tragfläche 23 auf. Die Tragfläche 23 trägt die getragene Struktur, in diesem konkreten Ausführungsbeispiel das Mauerwerk. Die Auflage 7 kann beispielsweise eine gewinkelte Schiene sein, die über mehrere Befestigungsvorrichtungen 3 an der Tragstruktur 2 gehalten ist.

Das Tragteil 4 weist einen Grundkörper 10 auf. Im Ausführungsbeispiel ist der Grundkörper 10 durch ein etwa U-förmiges Blech gebildet, wie Fig. 2 in der Draufsicht zeigt. Auch eine andere Gestaltung des Grundkörpers 10 kann vorteilhaft sein. Der Grundkörper 10 kann auch mehrteilig ausgebildet sein. Das Tragteil 4 weist eine erste Verzahnung 31 auf. Im Ausführungsbeispiel ist die erste Verzahnung 31 am Grundkörper 10 ausgebildet. Die erste Verzahnung 31 kann auch an einem anderen Teil des Tragteils 4 angeordnet sein. Das Halteteil 5 weist eine zweite Verzahnung 32 auf.

Die erste Verzahnung 31 greift in dem in Fig. 1 dargestellten, an der Tragstruktur 2 fixierten Zustand der Befestigungsvorrichtung 3 in die zweite Verzahnung 32 ein.

Die Spanneinrichtung 6 spannt das Tragteil 4 und das Halteteil 5 gegen die Tragstruktur 2. Die Spanneinrichtung 6 verspannt die Teile in Richtung einer Spannachse 25 in einer Spannrichtung x.

Die Tragstruktur 2 weist eine Befestigungsfläche 26 auf. Das Halteteil 5 weist eine Anlagefläche 24 auf. In befestigtem Zustand liegt die Anlagefläche 24 an der Befestigungsfläche 26 an. Die Spannrichtung x ist im Ausführungsbeispiel senkrecht zur Befestigungsfläche 26 und senkrecht zur Anlagefläche 24 ausgerichtet und von dem Grundkörper 10 zu der Tragstruktur 2 gerichtet.

Das Tragteil 4 umfasst eine Spannplatte 18. Die Spannplatte 18 ist an der dem Halteteil 5 entfernt liegenden Seite des Grundkörpers 10 angeordnet.

Die Spanneinrichtung 6 umfasst im Ausführungsbeispiel einen Spreizanker 21, eine Scheibe 19 und eine Mutter 20. Der Spreizanker 21 ist gemäß Tragstruktur 2 fixiert. Der Spreizanker 21 weist ein Gewinde 22 auf. Das Gewinde 22 ragt aus der Tragstruktur 2. Der Spreizanker 21 ragt durch das Halteteil 5, das Tragteil 4 und die Spannplatte 18. Der Spreizanker 21 erstreckt sich in die Tragstruktur 2 und ist in der Tragstruktur 2 verankert. Die Scheibe 19 liegt zwischen der Spannplatte 18 und der Mutter 20. Die Scheibe 19 kann auch entfallen. Die Mutter 20 ist auf das Gewinde 22 aufgeschraubt und drückt mit der Spannplatte 18 das Tragteil 4 und das Halteteil 5 gegen die Befestigungsfläche 26 der Tragstruktur 2.

Auch eine andere Gestaltung der Spanneinrichtung 6 kann vorgesehen sein. Als Spanneinrichtung 6 können alle Befestigungsmittel zum Einsatz kommen, die üblicherweise zur Fixierung von Bauteilen wie Konsolankern, Fassadenplattenankern oder dergleichen an einer Tragstruktur 2 zu befestigenden Elementen zum Einsatz kommen.

Wie Fig. 1 auch zeigt, ist am Grundkörper 10 eine Abstützung 9 festgelegt. Die Abstützung 9 weist in Einbaulage zum Halteteil 5 einen Abstand in einer Tragrichtung z auf.

Die Tragrichtung z entspricht im Einbauzustand der vertikalen Richtung. Die Tragrichtung z erstreckt sich senkrecht zur Spannrichtung x. Insbesondere erstreckt sich die Tragrichtung z parallel zur Anlagefläche 24.

In Fig. 1 ist eine Zahngrundebene 33 der ersten Verzahnung 31 eingezeichnet, die im Folgenden noch näher erläutert wird. Die Zahngrundebene 33 verläuft parallel zur Befestigungsfläche 26. Die Zahngrundebene 33 verläuft insbesondere parallel zur Wirkrichtung G der Schwerkraft.

Wie Fig. 2 zeigt, weist der Grundkörper 10 zwei Seitenwände 11 und 12 auf. Der Grundkörper 10 weist außerdem eine Rückwand 16 auf, die die beiden Seitenwände 11 und 12 miteinander verbindet. An der Rückwand 16 ist insbesondere die erste Verzahnung 31 ausgebildet.

Wie Fig. 2 zeigt, ist die erste Verzahnung 31 geteilt ausgebildet und weist zwei Abschnitte auf. Wie Fig. 2 auch zeigt, ragt zwischen die beiden Abschnitte der Verzahnung 31 eine Aufdickung 45 des Halteteils 5. Die Aufdickung 45 wird im Folgenden noch näher beschrieben. Die beiden Abschnitte der Verzahnung 31 weisen in einer Querrichtung y der Befestigungseinrichtung 3 einen Abstand zueinander auf. Die Querrichtung y verläuft senkrecht zur Spannrichtung x und zur Tragrichtung z. Die Querrichtung y ist im Einbauzustand insbesondere horizontal ausgerichtet.

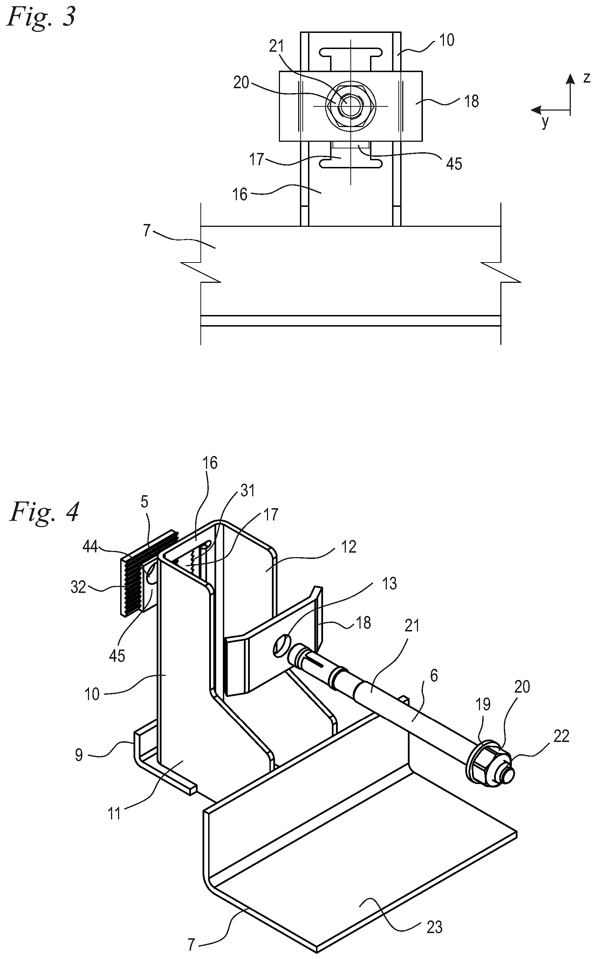

Wie Fig. 3 zeigt, weist die Rückwand 16 einen Schlitz 17 auf. Der Schlitz 17 erstreckt sich im Ausführungsbeispiel in Tragrichtung z. Die Querrichtung y und die Tragrichtung z liegen insbesondere parallel zur Befestigungsfläche 26 und die Spannrichtung x liegt senkrecht zur Befestigungsfläche 26 (Fig. 1 und 2). An den Rändern des Schlitzes 17 sind die Abschnitte der ersten Verzahnung 31 ausgebildet, wie Fig. 4 zu einem der Abschnitte zeigt. Die Abschnitte der Verzahnung 31 sind insbesondere an Stirnseiten von nach hinten umgebogenen Längsrändern des Schlitzes 17 ausgebildet.

Wie insbesondere Fig. 4 zeigt, weist das Halteteil 5 die Aufdickung 45 auf. Wie Fig. 3 zeigt, ragt die Aufdickung 45 zwischen die Längsseiten des Schlitzes 17 und die hier angeordneten Abschnitte der Verzahnung 31. Dies wird im Folgenden noch näher erläutert.

Wie Fig. 4 auch zeigt, weist das Halteteil 5 eine Öffnung 44 auf. Durch die Öffnung 44 ragt die Spanneinrichtung 6, im Ausführungsbeispiel der Spreizanker 21 der Spanneinrichtung 6. Die Spannplatte 18 weist eine Öffnung 13 auf. Durch die Öffnung 13 der Spannplatte 18 ragt die Spanneinrichtung 6, im Ausführungsbeispiel der Spreizanker 21.

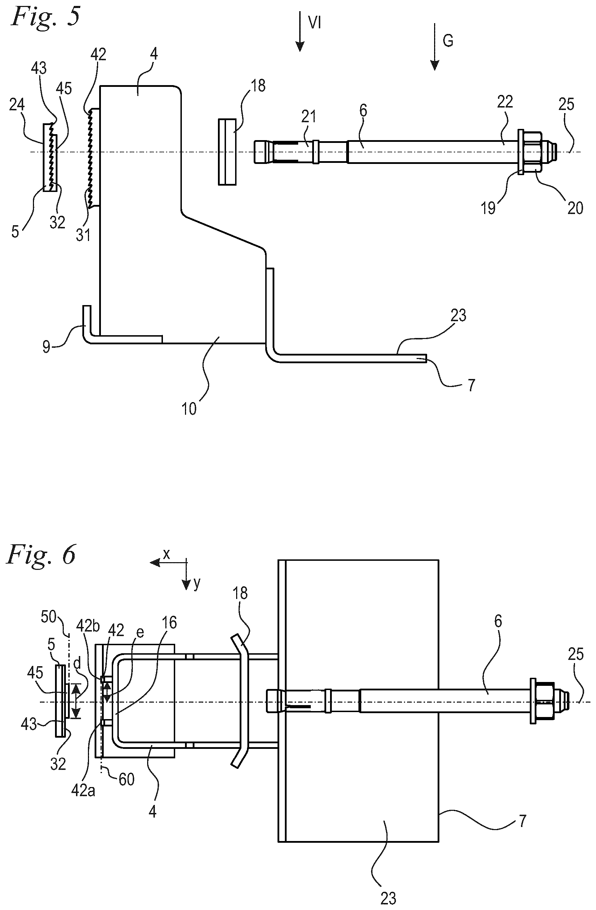

Fig. 5 zeigt das Tragteil 4 in Einbaulage. In Fig. 5 ist die Wirkrichtung G der Schwerkraft in üblicher Einbaulage eingezeichnet. In dieser Position ist die Tragfläche 23 horizontal ausgerichtet und weist nach oben. Auch eine geringfügige Neigung zur Horizontalen kann vorteilhaft sein.

Wie Fig. 5 zeigt, ist die Spannachse 25 im Ausführungsbeispiel die Mittelachse des Gewindes 22. Die Aufdickung 45 steht bei Blickrichtung senkrecht zur Spannachse 25 über die zweite Verzahnung 32 über. Dies zeigt die Seitenansicht in Fig. 5.

Die erste Verzahnung weist Zähne 42 auf. Die zweite Verzahnung weist Zähne 43 auf.

Fig. 6 zeigt die Abschnitte 42a und 42b der Zähne 42 der ersten Verzahnung 31. Die Abschnitte 42a und 42b der Zähne 42 bilden die beiden Abschnitte der Verzahnung 31. Abschnitte 42a sind an einer Längskante des Schlitzes 17 angeordnet und Abschnitte 42b an der anderen Längskante des Schlitzes 17.

Wie Fig. 6 zeigt, weisen die Abschnitte 42a und 42b der Zähne 42 einen Abstand e zur Spannachse 25 auf. Der Abstand e ist senkrecht zur Spannachse 25 gemessen. Im Ausführungsbeispiel ist die Anordnung symmetrisch und der Abstand e ist für beide Abschnitte 42a und 42b gleich. Auch eine unsymmetrische Anordnung mit unterschiedlichen Abständen e der Abschnitte 42a und 42b zur Spannachse 25 kann jedoch vorteilhaft sein. Die Aufdickung 45 weist eine in gleicher Richtung gemessene Breite d auf. Der Abstand e ist größer als die halbe Breite d. Dadurch können die Abschnitte 42a und 42b beidseitig der Aufdickung 45 angeordnet werden und bewirken eine Positionierung des Tragteils gegenüber dem Halteteil 5 in Querrichtung y.

Der Abstand e ist insbesondere um höchstens 2 mm größer als die halbe Breite d. Die Aufdickung 45 bewirkt eine vergleichsweise exakte Positionierung des Tragteils 4 an dem Halteteil 5. Die Breite d und die Abstände e sind insbesondere in Querrichtung y der Anordnung gemessen.

Die Zähne 42 der ersten Verzahnung 31 weisen eine Längsrichtung 60 auf. Die Zähne 43 der zweiten Verzahnung 32 weisen eine Längsrichtung 50 auf. Die Längsrichtung 60 und die Längsrichtung 50 verlaufen insbesondere in Querrichtung y und senkrecht zur Wirkrichtung G der Schwerkraft (Fig. 5). In der Darstellung in Fig. 6 ist die Wirkrichtung G der Schwerkraft senkrecht zur Blattebene in die Blattebene hinein orientiert. Die Längsrichtungen 50 und 60 sind insbesondere um mindestens 45° zur Wirkrichtung G der Schwerkraft geneigt.

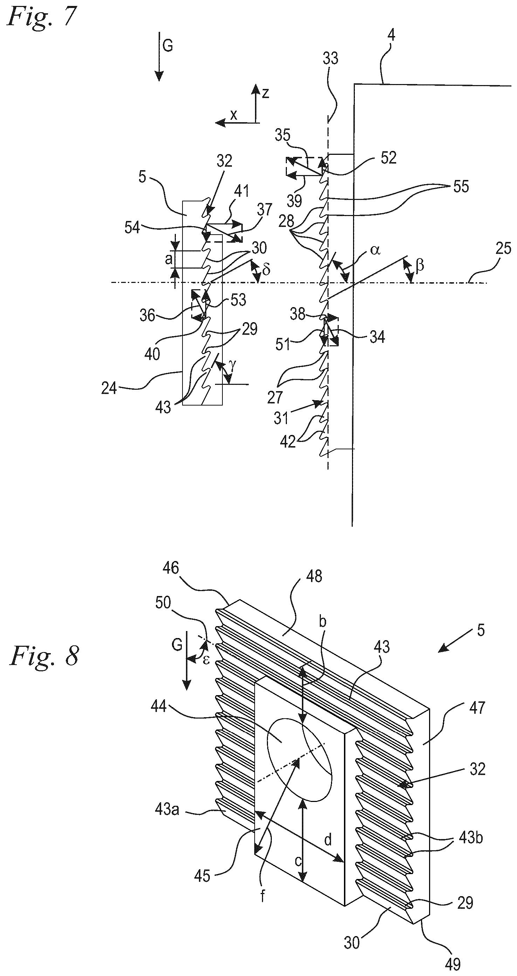

Fig. 7 zeigt die Gestaltung der ersten Verzahnung 31 und der zweiten Verzahnung 32 im Einzelnen. Die erste Verzahnung 31 umfasst die Zähne 42. Im Ausführungsbeispiel sind alle Zähne 42 identisch ausgebildet. Die Zähne 42 umfassen jeweils eine erste Zahnflanke 27 und eine zweite Zahnflanke 28. Die erste Zahnflanke 27 weist im Einbauzustand nach unten. Die zweite Zahnflanke 28 weist im Einbauzustand nach oben. Über die erste Zahnflanke 27 kann die Gewichtskraft des Tragteils 4 in das Halteteil 5 eingeleitet werden.

Zur Charakterisierung der Ausrichtung der Zahnflanken 27 und 28 sind nachfolgend die Flächennormalen 34 und 35 auf die Zahnflanken 27 und 28 angegeben. Die Flächennormale ist dabei ein Richtungsvektor, der senkrecht auf der jeweiligen Zahnflanke 27, 28 steht und von dieser weg gerichtet ist.

Wie Fig. 7 zeigt, weisen die ersten Zahnflanken 27 jeweils eine Flächennormale 34 auf. Die Flächennormale 34 weist einen Richtungsanteil 38 auf, der parallel zur Spannachse 25 und entgegen der Spannrichtung x gerichtet ist. Die Flächennormale 34 weist ferner einen Richtungsanteil 51 auf, der parallel zur Tragrichtung z, insbesondere in Einbaulage in Wirkrichtung G der Schwerkraft, gerichtet ist.

Die erste Verzahnung 31 besitzt die Zahngrundebene 33. Aus der Zahngrundebene 33 erheben sich die Zähne 42 der ersten Verzahnung 31. Die Zahngrundebene 33 verbindet jeweils die Täler der ersten Verzahnung 31 miteinander. Die Zahngrundebene 33 verläuft durch den Zahngrund 55 der ersten Verzahnung 31. Die Spannrichtung x ist von der Zahngrundebene 33 zu der Anlagefläche 24 gerichtet. Dies entspricht im Einbauzustand der Richtung von der Auflage 7 bzw. der getragenen Struktur 8 zur Tragstruktur 2 hin. In dieser Richtung ist das Tragteil 4 in horizontaler Richtung zu fixieren. Aufgrund des Richtungsanteils 38 bildet die erste Zahnflanke 27 entgegen der Spannrichtung x einen Hinterschnitt mit einer entgegengesetzt ausgerichteten Zahnflanke 29 der zweiten Verzahnung 32. Dadurch kann die erste Verzahnung 31 nicht entgegen der Spannrichtung x von der zweiten Verzahnung 32 abgenommen werden, sondern muss ergänzend entgegen der Wirkrichtung G der Schwerkraft bewegt werden.

Die Zahngrundebene 33 verläuft in an einer Tragstruktur 2 montiertem Zustand der Befestigungsvorrichtung 3 insbesondere vertikal, also parallel zur Wirkrichtung G der Schwerkraft. Die Zahngrundebene 33 verläuft insbesondere parallel zur Befestigungsfläche 26 der Tragstruktur 2. Insbesondere verläuft die Zahngrundebene 33 senkrecht zur Spannachse 25.

Die erste Zahnflanke 27 schließt mit der Spannachse einen Neigungswinkel β ein. Der Neigungswinkel β ist kleiner als 90° und größer als 0°. Der Neigungswinkel β beträgt insbesondere 10° bis 60°, insbesondere 20° bis 50°.

Die Zähne 42 weisen zweite Zahnflanken 28 auf, die vom Zahngrund 33 weg abfallen. Die zweiten Zahnflanken 28 weisen eine Flächennormale 35 auf. Die Flächennormale 35 weist einen Richtungsanteil 39 parallel zur Spannrichtung x auf, der in Spannrichtung x ausgerichtet ist. Die Flächennormale 35 weist einen Richtungsanteil 52 auf, der entgegen der Wirkrichtung G der Schwerkraft gerichtet ist.

Die zweiten Zahnflanken 28 sind zur Spannachse 25 um einen Neigungswinkel α geneigt. Der Neigungswinkel α und der Neigungswinkel β sind unterschiedlich groß. Der Neigungswinkel α ist insbesondere größer als der Neigungswinkel β. Der Neigungswinkel α beträgt zwischen 0° und 90°. Insbesondere beträgt der Neigungswinkel α 30° bis 80°, insbesondere 50° bis 70°.

Alle Zähne 42 der ersten Verzahnung 31 sind insbesondere identisch ausgebildet.

Die zweite Verzahnung 32 weist Zähne 43 mit ersten Zahnflanken 29 und zweiten Zahnflanken 30 auf. Alle Zähne 43 der zweiten Verzahnung 32 sind im Ausführungsbeispiel identisch ausgebildet. Die Gestaltung der zweiten Verzahnung 32 entspricht insbesondere der Gestaltung der ersten Verzahnung 31 um 180° um eine Längsrichtung 50 (Fig. 8) der Zähne 43 gedreht.

Die ersten Zahnflanken 29 weisen eine Flächennormale 36 auf, die einen Richtungsanteil 40 in Spannrichtung x aufweisen. Die Flächennormale 36 weist einen Richtungsanteil 53 auf, der entgegen der Wirkrichtung G der Schwerkraft ausgerichtet ist.

Aufgrund der Ausrichtung der ersten Zahnflanken 29 wirkt die Gewichtskraft G bei Auflage der ersten Verzahnung 31 auf die ersten Zahnflanken 29 der zweiten Verzahnung 32 mit einem Anteil in Spannrichtung x. Dadurch wird das Tragteil 4 aufgrund seiner Gewichtskraft in Richtung zum Halteteil 5 und zur Tragstruktur 2 gezogen. Die erste Zahnflanke 29 der zweiten Verzahnung 32 bewirkt, dass die ineinandergreifenden Verzahnungen 31 und 32 in Verbindung mit der Gewichtskraft einem Lösen der Spanneinrichtung 6 entgegenwirken.

Die ersten Zahnflanken 29 sind zur Spannachse 25 um einen Neigungswinkel δ geneigt. Der Neigungswinkel δ ist kleiner als 90° und größer als 0°. Der Neigungswinkel δ beträgt insbesondere 10° bis 60°, insbesondere 20° bis 50°. Der Neigungswinkel δ entspricht insbesondere etwa dem Neigungswinkel β.

Die zweiten Zahnflanken 30 weisen eine Flächennormale 37 auf. Die Flächennormale 37 weist einen Richtungsanteil 41 auf, der entgegen der Spannrichtung x ausgerichtet ist. Die Flächennormale 37 weist einen Richtungsanteil 54 auf, der in Wirkrichtung G der Schwerkraft gerichtet ist.

Die zweite Zahnflanke 30 schließt mit der Spannachse 25 einen Neigungswinkel γ ein. Der Neigungswinkel γ entspricht insbesondere etwa dem Neigungswinkel α. Im Ausführungsbeispiel ist der Neigungswinkel γ der besseren Übersicht halber zu einer Parallelen zur Spannachse 25 eingezeichnet. Der Neigungswinkel γ beträgt zwischen 0° und 90°. Insbesondere beträgt der Neigungswinkel γ 30° bis 80°, insbesondere 50° bis 70°. Der Neigungswinkel γ und der Neigungswinkel δ sind unterschiedlich groß. Der Neigungswinkel γ ist insbesondere größer als der Neigungswinkel δ.

Wie Fig. 5 zeigt, fallen die Zahnflanken 29 und 30 der zweiten Verzahnung 32 in Einbaulage in Richtung auf eine Anlagefläche 24 der Tragstruktur hin ab. Dies ist auch in Fig. 1 erkennbar.

Die zweite Verzahnung 32 weist einen Rastabstand a auf. Der Rastabstand a der zweiten Verzahnung 32 entspricht dem Rastabstand der ersten Verzahnung 31. Der Rastabstand der ersten Verzahnung 31 kann auch ein ganzzahliges Vielfaches oder ein ganzzahliger Teiler des Rastabstands a sein. Der Rastabstand a der zweiten Verrastung beträgt insbesondere höchstens 10 mm, insbesondere höchstens 5 mm, insbesondere höchstens 3 mm. Der Rastabstand a beträgt insbesondere mindestens 2 mm. Der Rastabstand a ist zwischen benachbarten Zahnspitzen der Zähne 43 der zweiten Verzahnung 32 gemessen.

Fig. 8 zeigt die Gestaltung des Halteteils 5 im Einzelnen. Das Halteteil 5 ist im Ausführungsbeispiel als Platte ausgebildet. Das Halteteil 5 weist zwei Längsseiten 46 und 47 auf, die quer zu einer Längsrichtung 50 der Zähne 43 verlaufen. Im Ausführungsbeispiel verlaufen die Längsseiten 46 und 47 senkrecht zur Längsrichtung 50.

Das Halteteil 5 weist eine Oberseite 48 und eine Unterseite 49 auf. In üblicher Einbaulage ist die Oberseite 48 nach oben orientiert und die Unterseite 49 ist nach unten orientiert. Die Längsseiten 46 und 47 erstrecken sich in üblicher Einbaulage in vertikaler Richtung. Die Oberseite 48 und die Unterseite 49 verbinden die Längsseiten 46 und 47.

Wie Fig. 8 zeigt, ist zwischen der Aufdickung 45 und der Oberseite 48 ein Bereich der Verzahnung 32 mit durchgehenden Zähnen 43 vorgesehen. Die Aufdickung 45 teilt die darunter liegenden Zähne 43 in einen ersten Abschnitt 43a und einen zweiten Abschnitt 43b. In die Abschnitte 43a und 43b greifen die Abschnitte 42a und 42b der Zähne 42 der ersten Verzahnung 31 ein. Die Aufdickung 45 ragt, wie auch Fig. 3 und Fig. 4 zeigen, zwischen die Abschnitte der ersten Verzahnung 31.

Das Halteteil 5 weist eine Öffnung 44 auf, durch die die Spanneinrichtung 6 ragt. Die Öffnung 44 ist außermittig im Halteteil 5 angeordnet. Die Öffnung 44 weist zur Oberseite 48 einen Abstand b und zur Unterseite 49 einen Abstand c auf. Die Abstände b und c sind parallel zur Zahngrundebene 33 gemessen. In Einbaulage sind die Abstände b und c insbesondere in Tragrichtung z gemessen. Der Abstand b ist im Ausführungsbeispiel kleiner als der Abstand c. Wird das Halteteil 5 mit seiner Öffnung 44 über den Spreizanker 21 der Spanneinrichtung 6 geschoben, so richtet sich das Halteteil 5 aufgrund der Schwerkraft zwangsweise so aus, dass die zweite Verzahnung 32 sich in der richtigen Orientierung befindet.

Ergänzend ist die Aufdickung 45 im Ausführungsbeispiel unsymmetrisch um die Öffnung 44 angeordnet. Die Aufdickung 45 erstreckt sich bis zur Unterseite 49 und weist zur Oberseite 48 einen Abstand auf. Auch dadurch ergibt sich eine unsymmetrische Gewichtsverteilung des Halteteils 5. Auch andere Maßnahmen, die zu einer unsymmetrischen Gewichtsverteilung des Halteteils 5 um die Öffnung 44 und dadurch zu einer zwangsweisen Ausrichtung des Halteteils 5 in der korrekten Drehlage um die Öffnung 44 führen, können ergänzend oder alternativ vorgesehen sein.

Die Aufdickung 45 erlaubt auf einfache Weise eine optische Kontrolle der korrekten Einbaulage des Halteteils 5. Insbesondere ist die optische Kontrolle aufgrund der unsymmetrischen Gestaltung der Aufdickung 45 möglich.

Im Ausführungsbeispiel ist die Oberfläche der Aufdickung 45 glatt ausgebildet. Auch eine anders gestaltete Oberfläche, beispielweise eine strukturierte Oberfläche der Aufdickung 45 kann jedoch vorteilhaft sein.

Die Aufdickung 45 weist einen größten Abstand f zur Spannachse 25 auf, wobei der Abstand f senkrecht zur Spannachse 25 gemessen ist. Der Abstand f ist größer als mindestens ein Abstand e eines Abschnitts 42a, 42b eines Zahns 42 zur Spannachse 25 (siehe Fig. 6). Dadurch kann die Aufdickung 45 sich zwischen den Abschnitten 42a, 42b der Zähne 42 nicht vollständig um die Spannachse 25 drehen und ist während der Montage positioniert. Insbesondere ist der Abstand f größer als der Abstand e jedes Abschnitts 42a, 42b zur Spannachse 25. Die Aufdickung 45 begrenzt die maximal mögliche Rotation des Halteteils 5 um die Spannachse 25 während der Montage, bevor die Verzahnungen 31 und 32 miteinander in Eingriff sind.

Aufgrund der Gestaltung der ersten Verzahnung 31 und der zweiten Verzahnung 32 können die Verzahnungen 31 und 32 in unterschiedlichen Relativpositionen zueinander ineinander eingreifen. Die möglichen Positionen weisen dabei einen Mindestabstand auf, der dem Rastabstand a entspricht. Die erste Verzahnung 31 und die zweite Verzahnung 32 sind so ausgebildet, dass eine Vielzahl unterschiedlicher Relativpositionen möglich ist.

Insbesondere weist die erste Verzahnung 31 eine größere Anzahl von Zähnen 42 auf als die zweite Verzahnung 32. Insbesondere ragen bei zulässigen Positionen der ersten Verzahnung 31 in der zweiten Verzahnung 32 alle Zähne 43 der zweiten Verzahnung 32 zwischen Zähne 42 der ersten Verzahnung 31.

## Patentansprüche

1. Befestigungsvorrichtung umfassend ein Tragteil (4), ein Halteteil (5) und eine Spanneinrichtung (6), wobei die Befestigungsvorrichtung (3) eine Anlagefläche (24) zur Anlage an einer Tragstruktur (2) aufweist, wobei die Spanneinrichtung (6) eine Spannachse (25) aufweist, wobei das Tragteil (4) eine erste Verzahnung (31) aufweist und wobei das Halteteil (5) eine zweite Verzahnung (32) aufweist, wobei die erste Verzahnung (31) dazu ausgebildet ist, in die zweite Verzahnung (32) eingreifen zu können, wobei die erste Verzahnung (31) eine Zahngrundebene (33) aufweist, die sich durch den Zahngrund der ersten Verzahnung (31) erstreckt, wobei die Spanneinrichtung (6) eine Spannrichtung (x) aufweist, die parallel zur Spannachse (25) von der Zahngrundebene (33) zu der Anlagefläche (24) gerichtet ist,
**dadurch gekennzeichnet, dass** das Halteteil (5) die Anlagefläche (24) aufweist und dass eine Flächennormale (36) auf eine erste Zahnflanke (29) der zweiten Verzahnung (32) einen Richtungsanteil (40) in Spannrichtung (x) aufweist.

2. Befestigungsvorrichtung nach Anspruch 1,
**dadurch gekennzeichnet, dass** die beiden Zahnflanken (29, 30) mindestens eines Zahns (43), insbesondere aller Zähne (43) der zweiten Verzahnung (32) zur Spannachse (25) um unterschiedliche Winkel (γ, δ) geneigt sind.

3. Befestigungsvorrichtung nach Anspruch 1 oder 2,
**dadurch gekennzeichnet, dass** die erste Verzahnung (31) dazu ausgebildet ist, in mindestens zwei Positionen, insbesondere in einer Vielzahl von unterschiedlichen Positionen in die zweite Verzahnung (32) eingreifen zu können.

4. Befestigungsvorrichtung nach einem der Ansprüche 1 bis 3,
**dadurch gekennzeichnet, dass** der Rastabstand (a) der zweiten Verzahnung (32) höchstens 5 mm, insbesondere höchstens 3 mm beträgt.

5. Befestigungsvorrichtung nach einem der Ansprüche 1 bis 4,
**dadurch gekennzeichnet, dass** das Halteteil (5) eine Öffnung (44) für die Spanneinrichtung (6) aufweist, durch die die Spanneinrichtung (6) ragt.

6. Befestigungsvorrichtung nach Anspruch 5,
**dadurch gekennzeichnet, dass** das Halteteil (5) zwei Längsseiten (46, 47) aufweist, die quer zur Längsrichtung (50) der Zähne (43) der zweiten Verzahnung (32) liegen, wobei die beiden Längsseiten (46, 47) von einer Oberseite (48) und von einer Unterseite (49) des Halteteils (5) verbunden sind, wobei die Oberseite (48) des Halteteils (5) zur Öffnung (44) einen ersten Abstand (b) aufweist und wobei die Unterseite (49) des Halteteils (5) zur Öffnung (44) einen zweiten Abstand (c) aufweist, wobei der erste Abstand (b) und der zweite Abstand (c) senkrecht zur Längsrichtung (50) der Zähne (43) gemessen ist, wobei der erste Abstand (b) kleiner als der zweite Abstand (c) ist.

7. Befestigungsvorrichtung nach einem der Ansprüche 1 bis 6,
**dadurch gekennzeichnet, dass** das Halteteil (5) eine Aufdickung (45) aufweist, die sich aus der zweiten Verzahnung (32) erhebt und zumindest einen Teil der Zähne (43) der zweiten Verzahnung (32) in zwei Zahnabschnitte (43a, 43b) teilt.

8. Befestigungsvorrichtung nach Anspruch 7,
**dadurch gekennzeichnet, dass** die Aufdickung (45) eine glatte Oberfläche aufweist.

9. Befestigungsvorrichtung nach Anspruch 7 oder 8,
**dadurch gekennzeichnet, dass** zumindest ein Teil der Zähne (42) der ersten Verzahnung (31) zwei Zahnabschnitte (42a, 42b) aufweist, und dass der Abstand (e) mindestens eines Zahnabschnitts (42a, 42b) zur Spannachse (25) kleiner als der größte Abstand (f) der Aufdickung (45) zur Spannachse (25) ist, wobei die Abstände (e, f) senkrecht zur Spannachse (25) gemessen sind.

10. Befestigungsvorrichtung nach einem der Ansprüche 1 bis 9,
**dadurch gekennzeichnet, dass** das Tragteil (4) an der der Anlagefläche (24) entfernt liegenden Seite eine Auflage (7) mit einer Tragfläche (23) aufweist.

11. Befestigungsvorrichtung nach einem der Ansprüche 1 bis 10,
**dadurch gekennzeichnet, dass** die Spanneinrichtung (6) ein Gewinde (22) umfasst und dass die Spannachse (25) die Mittelachse des Gewindes (22) ist.

12. Bauwerk mit einer Befestigungsvorrichtung (3) nach einem der Ansprüche 1 bis 11 und mit einer Tragstruktur (2), wobei die Spanneinrichtung (6) an der Tragstruktur (2) fixiert ist und das Tragteil (4) und das Halteteil (5) in Richtung der Spannachse (25) mit der Anlagefläche (24) gegen die Tragstruktur (2) spannt und wobei die erste Verzahnung (31) und die zweite Verzahnung (32) ineinander eingreifen,
**dadurch gekennzeichnet, dass** die Zahnflanken (29, 30) der zweiten Verzahnung (32) in Richtung auf die Anlagefläche (24) der Tragstruktur (2) abfallen.

13. Bauwerk nach Anspruch 12 mit einer Befestigungsvorrichtung nach Anspruch 10,
**dadurch gekennzeichnet, dass** die Tragfläche (23) horizontal ausgerichtet ist und nach oben weist.

14. Bauwerk nach Anspruch 12 oder 13,
**dadurch gekennzeichnet, dass** die Längsrichtung (50) der Zähne (43) der zweiten Verzahnung (32) mit der Wirkrichtung (G) der Schwerkraft einen Winkel (ε) von mindestens 45° einschließt.
